# EUROPEAN PATENT APPLICATION

(11) **EP 2 878 477 A1**
(43) Date of publication of application: **03.06.2015**
(21) Application number: 14194634.3
(22) Date of filing: 25.11.2014
(51) Int. Cl.: B60K 28/10, B60W 50/00, B60W 30/14, B60W 50/14

(54) **Motor vehicle with improved safety**

(30) Priority: 27.11.2013 SE 1351407
(71) Applicant: Scania CV AB, 151 87 Södertälje (SE)
(72) Inventor: Claesson, André, 146 38 Tullinge (SE); Hesse, Johan, 611 56 Nyköping (SE)
(74) Representative: Scania CV AB

(57) **Abstract**

The present invention relates to a method for safety adjustment of a motor vehicle. The method comprises the step (S1) of temporarily adjusting the vehicle to the fact that it is uncompleted and therefore will not afford the functionality expected of the completed vehicle.

The present invention relates to a system for safety adjustment of a motor vehicle. It relates also to a motor vehicle. It also relates to a computer programme and a computer programme product.

## Description

### TECHNICAL FIELD

The invention relates to a method for safety adjustment of a motor vehicle according to the preamble of claim 1. The invention relates to a system for safety adjustment of a motor vehicle. The invention relates also to a vehicle. The invention also relates to a computer programme and a computer programme product.

### BACKGROUND

When they leave the factory, vehicles, especially buses, are often not complete.

Traffic safety may thus be seriously impaired. For example, the only superstructure on an unbodied bus, i.e. a bus chassis, may be a retractable seat for the driver.

There may also be safety systems which are fitted and calibrated at a later stage, e.g. camera systems, radar systems or the like. The information displayed for the driver in such cases may be unclear.

It may well be that a vehicle apparently completed (provided with superstructures/bodywork) is not complete when delivered to the customer, e.g. not having undergone a full verification comprising calibration of the vehicle's functions.

In such cases the final customer may not be able to tell visually that the vehicle is uncompleted and has perhaps no safety systems activated.

### OBJECTS OF THE INVENTION

One object of the present invention is to provide a method for safety adjustment of a motor vehicle which improves the vehicle's traffic safety.

One object of the present invention is to provide a system for safety adjustment of a motor vehicle which improves the vehicle's traffic safety.

### SUMMARY OF THE INVENTION

These and other objects indicated by the description set out below are achieved by a method, a system and a vehicle of the kinds indicated in the introduction which further present the features indicated in the characterising part of the attached independent claim 1. Preferred embodiments of the method and the system are defined in the attached dependent claims.

The invention achieves the objects with a method for safety adjustment of a motor vehicle, comprising the step of temporarily adjusting the vehicle to the fact that it is uncompleted and therefore will not afford the functionality expected of the completed vehicle.

Improved traffic safety is thus made possible in that adjustment of the vehicle makes it possible to limit such functions of it as speed, acceleration, engine speed and the like so that it operates more safely, and to make it clear to the driver that the vehicle is uncompleted in terms of functionality, so that he/she may then take this into account when operating the vehicle. This obviates any need for diagnostic tools to find out whether the vehicle's electrical systems have been completed. Error codes and warnings such as are provided by combination instruments during operation of conventional uncompleted vehicles are thus obviated. The risk that the vehicle may have undergone no full verification comprising calibration of its functions before being delivered to the final user is thus minimised by the vehicle in the uncompleted state being thus adjusted until such time as it is completed.

In one embodiment of the method the step of temporarily adjusting the vehicle comprises the step of adjusting the vehicle's functionality. Improved traffic safety is thus made possible in that adjustment of the vehicle makes it possible to limit such functions of it as speed, acceleration, engine speed and the like so that it operates more safely,

In one embodiment of the method the step of adjusting the vehicle's functionality comprises functions pertaining to one or more from among vehicle speed, acceleration, transmission, engine speed and cruise control function. Adjusting such functions improves traffic safety when operating an uncompleted vehicle.

In one embodiment of the method the step of temporarily adjusting the vehicle comprises the step of making it clear to the driver that it is uncompleted in terms of functionality. Making this clear to the driver that the vehicle is functionally uncompleted improves traffic safety in that he/she will be aware that the vehicle is uncompleted and will thus be able to adjust his/her driving behaviour accordingly.

In one embodiment of the method this warning is conveyed to the driver by visual, acoustic and/or tactile means, providing an effective way of informing him/her that the vehicle is uncompleted in terms of functionality and thereby improving traffic safety.

In one embodiment of the method the step of temporarily adjusting the vehicle comprises the step of making it clear externally that the vehicle is uncompleted in terms of functionality. Making this clear externally that the vehicle is functionality uncompleted makes improved traffic safety possible in that the other road users/vehicles will be able to adjust their behaviour to cater for the fact that the vehicle is uncompleted.

In one embodiment of the method this warning is conveyed externally by visual and/or acoustic means, providing an effective way of external information in the form of other road users/vehicles that the vehicle is uncompleted as regards functionality and thereby improving traffic safety.

In one embodiment of the method this warning is conveyed externally by wireless communication, providing an effective way of external information in the form of other road users/vehicles that the vehicle is uncompleted in terms of functionality and thereby improving traffic safety.

In one embodiment of the method the step of temporarily adjusting the vehicle comprises the step of taking the vehicle's location in account, thereby potentially improving traffic safety in that adjustment of, for example, the vehicle's functions may be based on its location. If for example the vehicle is within the factory area, it will for example be possible for its warning flashers function to be activated so that the vehicle flashes continually, whereas activation of the same function would perhaps not be allowed when the vehicle is on public roads. On a public road the vehicle's speed limitation function may be activated. The vehicle may need to be adjusted to different regulations in different countries regarding uncompleted vehicles.

In one embodiment of the method the adjustment forms part of a particular mode of the vehicle's functionality. This makes it possible for such a mode for the adjustment to be activated for the uncompleted vehicle, with permanent deactivation of said mode as a final stage in the vehicle's completion and calibration.

The invention achieves the objects with a system for safety adjustment of a motor vehicle, comprising means for temporarily adjusting the vehicle to the fact that it is uncompleted and therefore will not afford the functionality expected of the completed vehicle.

In one embodiment of the system the means for temporarily adjusting the vehicle comprises means for adjusting its functionality.

In one embodiment of the system the means for adjusting the vehicle's functionality comprises functions pertaining to one or more from among vehicle speed, acceleration, transmission, engine speed and cruise control function.

In one embodiment of the system the means for temporarily adjusting the vehicle comprises means for making this clear to the driver that the vehicle is uncompleted in terms of functionality.

In one embodiment of the system the means for making this clear to the driver comprises visual, acoustic and/or tactile warning means.

In one embodiment of the system the means for temporarily adjusting the vehicle comprises means for making this clear externally that the vehicle is uncompleted in terms of functionality.

In one embodiment of the system the means for making this clear externally comprises visual and/or acoustic warning means.

In one embodiment of the system the means for making this clear externally comprises means for wireless communication.

In one embodiment of the system the means for temporarily adjusting the vehicle comprises means for taking the vehicle's location into account.

In one embodiment of the system the means for adjustment forms part of a particular mode of the vehicle's functionality.

The system claims indicate advantages corresponding to those mentioned above for the respective method claims.

### DESCRIPTION OF DRAWINGS

The present invention will be better understood by reading the detailed description set out below in conjunction with the attached drawings, in which the same reference notations are used for similar items throughout the various views, and
Fig. 1 schematically illustrates a vehicle according to an embodiment of the present invention,
Fig. 2 is a schematic block diagram illustrating a system for safety adjustment of a motor vehicle according to an embodiment of the present invention,
Fig. 3 is a schematic block diagram illustrating a method for safety adjustment of a motor vehicle according to an embodiment of the present invention, and
Fig. 4 schematically illustrates a computer according to an embodiment of the present invention.

### DESCRIPTION OF EMBODIMENTS

The term "link" refers herein to a communication link which may be a physical line such as an opto-electronic communication line, or a non-physical line such as a wireless connection, e.g. a radio link or microwave link.

The term "vehicle functionality" refers herein to any suitable functionality of the vehicle, comprising such functions as vehicle speed, acceleration, transmission, engine speed and cruise control function, and functionalities in the form of visual means such as warning flashers, functionalities in the form of acoustic means such as signal horns or other acoustic means, and also the vehicle's electrical system generally.

The term "uncompleted" refers herein to a vehicle which is not ready to be released to a final user because it will not afford the functionality expected of the completed vehicle, not all units have been installed in the vehicle, and systems on board the vehicle have not been calibrated, i.e. the vehicle is uncompleted in terms of functionality. Completeness of a vehicle in terms of functionality does for example require the calibration of its systems for so-called automatic emergency braking ***[PAGE 7 LINE 9 READING "Braking"]*** (AEB), cameras and radar. Completeness in terms of functionality further requires the calibration of systems for so-called lane ***[LINE 11 READING* "*Lane"]*** departure warning (LDW) and the vehicle's cameras. Such calibration of cameras and radar is intended to take place when the vehicle is normally level, i.e. with its suspension systems, e.g. air suspension systems, in a normal state such that the vehicle is not sloping in any direction. The term "uncompleted" refers not only to an uncalibrated vehicle with bodywork but also to a vehicle without bodywork.

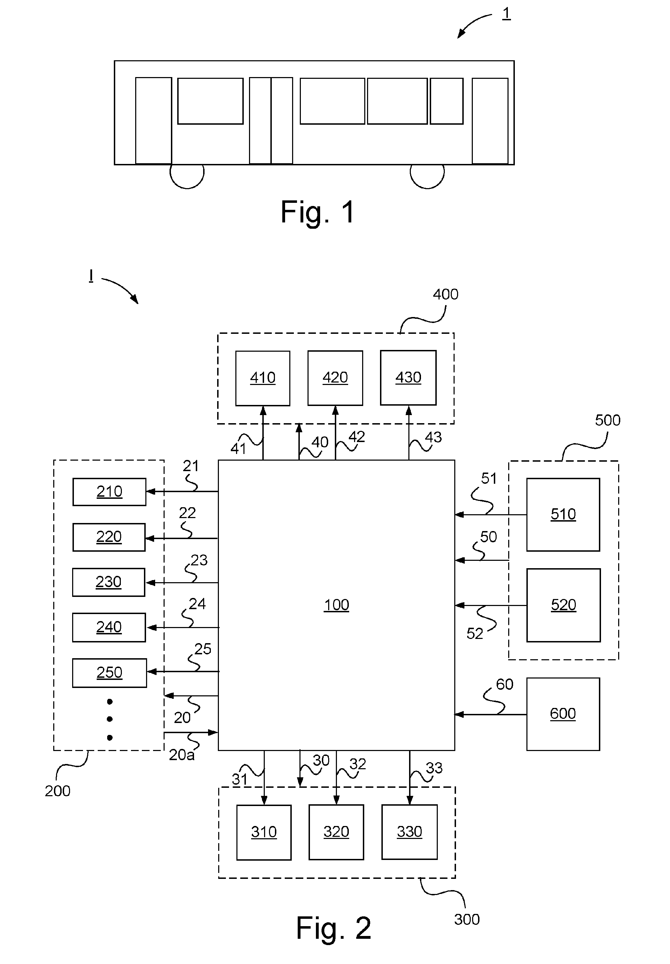

Fig. 1 illustrates schematically a motor vehicle 1 according to an embodiment of the present invention. The vehicle exemplified is a heavy vehicle in the form of a bus. It may alternatively be any suitable vehicle such as a truck or a car. The vehicle is provided with a system I according to the present invention.

Fig. 2 is a schematic block diagram illustrating a system I for safety adjustment of a motor vehicle according to an embodiment of the present invention.

The system I comprises an electronic control unit 100.

The system I comprises means 200, 300, 400, 500, 600 for temporarily adjusting the vehicle to the fact that it is uncompleted and therefore will not afford the functionality expected of the completed vehicle.

The means 200, 300, 400, 500, 600 for temporarily adjusting the vehicle comprises means 200 for adjusting the vehicle's functionality. The system comprises accordingly said means 200.

The means 200 for adjusting vehicle functionality comprises adjustment of functions pertaining to one or more from among vehicle speed, acceleration, transmission, engine speed and cruise control function.

The means 200 for adjusting vehicle functionality comprises in one embodiment means 210 for adjustment of vehicle speed.

The means 210 for adjustment of vehicle speed comprises in one embodiment a speed limiter suited, when activated, to limiting the vehicle to an adjusted speed.

The means 200 for adjusting vehicle functionality comprises in one embodiment means 220 for adjustment of acceleration. Said means 220 comprises in one embodiment an acceleration limiter suited, when activated, to limiting the vehicle to an adjusted acceleration.

The means 200 for adjusting vehicle functionality comprises in one embodiment means 230 for adjustment of transmission. Said means 230 comprises in one embodiment a transmission limiter suited, when activated, to limiting gear changes in the vehicle's transmission to an adjusted change. Adjustment of transmission comprises accordingly adjustment of the vehicle's gear changes such that, in one variant, the vehicle is adjusted to only being able to operate in certain gear positions, which in one variant are low gears.

The means 200 for adjusting vehicle functionality comprises in one embodiment means 240 for adjustment of engine speed. Said means 240 comprises in one embodiment an engine speed limiter suited, when activated, to limiting the engine to an adjusted speed.

The means 200 for adjusting vehicle functionality comprises in one embodiment means 250 for adjustment of cruise control function, which adjustment comprises deactivation of this function.

The means 200 for adjusting vehicle functionality may comprise means for adjustment of any suitable vehicle function.

The means 200 for adjusting vehicle functionality comprises in one variant means for determining which vehicle functionalities have been adjusted and how they have been adjusted. The means 200 for adjusting vehicle functionality comprises in one variant means for determining whether the vehicle has been fitted with its bodywork.

The means 200, 300, 400, 500, 600 for temporarily adjusting the vehicle comprises means 300 for making it clear to the driver that the vehicle is uncompleted in terms of functionality. The system I comprises accordingly said means 300.

The means 300 for making it clear to the driver that the vehicle is uncompleted in terms of functionality comprises in one variant visual warning means 310 which may comprise any suitable visual warning means and may comprise any kind of visual alarm signal in the form of a light source, flashing and/or a display unit to inform the driver that the vehicle is uncompleted in terms of functionality and also, in one variant, which vehicle functions are adjusted.

The means 300 for making it clear to the driver that the vehicle is uncompleted in terms of functionality comprises in one variant acoustic warning means 320 which may comprise any suitable warning means and may comprise any kind of alarm signal, a voice to inform the driver that the vehicle is uncompleted in terms of functionality and also, in one variant, which vehicle functions are adjusted.

The means 300 for making it clear to the driver that the vehicle is uncompleted in terms of functionality comprises in one variant tactile warning means 330 which may comprise any suitable tactile warning means and may comprise some form of vibration in the steering wheel, the driving seat or the like.

The means 300 for making it clear to the driver that the vehicle is uncompleted in terms of functionality comprises accordingly visual, acoustic and/or tactile warning means.

The means for temporarily adjusting the vehicle comprises means 400 for making it clear externally that the vehicle is uncompleted in terms of functionality. The system comprises accordingly said means 400.

The means 400 for making it clear externally that the vehicle is uncompleted in terms of functionality comprises in one variant visual warning means 410 which may comprise any suitable means for visual warning to the surroundings and may comprise any kind of visual alarm signal in the form of a light source, flashing and/or a display unit to inform the surroundings that the vehicle is uncompleted in terms of functionality.

The means 400 for making it clear externally that the vehicle is uncompleted in terms of functionality comprises in one variant acoustic warning means 420 which may comprise any suitable means for acoustic warning and may comprise any kind of acoustic alarm signal to inform the surroundings that the vehicle is uncompleted in terms of functionality.

The means 400 for making it clear externally that the vehicle is uncompleted in terms of functionality comprise accordingly visual and/or acoustic warning means.

The means 400 for making it clear externally comprises means 430 for wireless communication.

The means 430 for wireless communication comprises means for communication between the vehicle and one or more further units. Such units comprise in one variant other vehicles along the vehicle's itinerary, in which case the communication means will be suited to providing communication between said other vehicles and the vehicle in order to communicate that the vehicle is uncompleted in terms of functionality. Such units may comprise infrastructure along the vehicle's itinerary, which may take the form of any suitable receiver unit/communication control unit/gateway for receiving information that the vehicle is uncompleted in terms of functionality. The receiving may for example take place at a traffic intersection.

The means for temporarily adjusting the vehicle comprises means 500 for taking the vehicle's location into account. The system accordingly comprises said means 500.

The means 500 for taking the vehicle's location into account comprises means 510 for establishing the vehicle's location in the form of a geographical position determination system, i.e. GPS, for identifying the vehicle's location, comprising where the vehicle is within a specific country and also in which country the vehicle is.

The means 500 for taking the vehicle's location into account comprises a map information unit 520 providing map data comprising characteristics along the vehicle's itinerary such as traffic lanes, types of road, protected areas such as factory areas for vehicle manufacture, exit/entry roads, obstacles, speed limits and the like.

The adjusting means 200, 300, 400, 500, 600 forms part of a particular mode of the vehicle's functionality. The means 200, 300, 400, 500, 600 comprises means 600 for activation of modes of the vehicle's functionality. In one variant this mode activation means 600 comprises means for deactivation of said modes on completed vehicles, which deactivation means in one variant takes the form of means for permanent deactivation.

The electronic control unit 100 is signal-connected to the means 200 for adjusting the vehicle's functionality, via a link 20 which enables it to send to said means 200 a signal which represents data for vehicle functionality adjustment.

The electronic control unit 100 is signal-connected to the means 210 for adjusting the vehicle's speed, via a link 21 which enables it to send to said means 210 a signal which represents data for vehicle speed adjustment.

The electronic control unit 100 is signal-connected to the means 220 for adjustment of acceleration, via a link 22 which enables it to send to said means 220 a signal which represents data for acceleration adjustment.

The electronic control unit 100 is signal-connected to the means 230 for adjustment of transmission, via a link 23 which enables it to send to said means 230 a signal which represents data for transmission adjustment.

The electronic control unit 100 is signal-connected to the means 240 for adjustment of engine speed, via a link 24 which enables it to send to said means 240 a signal which represents data for adjustment of the vehicle's engine speed.

The electronic control unit 100 is signal-connected to the means 250 for adjustment of cruise control function, via a link 25 which enables it to send to said means 250 a signal which represents data for adjustment of the vehicle's cruise control function.

The electronic control unit 100 is signal-connected from the means 200 for adjusting the vehicle's functionality, via a link 20a which enables it to receive from said means 200 a signal which represents data on which of the vehicle's functionalities have been adjusted and how they have been adjusted, and data on whether the vehicle has been fitted with its bodywork.

The electronic control unit 100 is signal-connected to the means 300 making it clear to the driver that the vehicle is uncompleted in terms of functionality, via a link 30 which enables it to send to said means 300 a signal which represents presentation data for the warning to the driver.

The electronic control unit 100 is signal-connected to the means 310 for visual warning, via a link 31 which enables it to send to said means 310 a signal which represents presentation data for the visual warning to the driver.

The electronic control unit 100 is signal-connected to the means 320 for acoustic warning, via a link 32 which enables it to send to said means 320 a signal which represents presentation data for the acoustic warning to the driver.

The electronic control unit 100 is signal-connected to the means 330 for tactile warning, via a link 33 which enables it to send to said means 330 a signal which represents presentation data for the tactile warning to the driver.

The electronic control unit 100 is signal-connected to the means 400 for making it clear externally that the vehicle is uncompleted in terms of functionality, via a link 40. The electronic control unit 100 is via the link 40 adapted to send to said means 400 a signal which represents presentation data for the warning to the driver

The electronic control unit 100 is signal-connected to the means 410 for visual warning, via a link 41 which enables it to send to said means 410 a signal which represents presentation data for the visual warning to the surroundings.

The electronic control unit 100 is signal-connected to the means 420 for acoustic warning, via a link 42 which enables it to send to said means 420 a signal which represents presentation data for the acoustic warning to the surroundings.

The electronic control unit 100 is signal-connected to the means 430 for wireless communication, via a link 43 which enables it to send to said means 430 a signal which represents communication data for comprising information that the vehicle is uncompleted in terms of functionality, to warn the surroundings such as other vehicles along the vehicle's itinerary.

The electronic control unit 100 is signal-connected from the means 500 for taking the vehicle's location into account, via a link 50 which enables it to receive from said means 500 a signal for taking position data representing the vehicle's location into account.

The electronic control unit 100 is signal-connected from the means 510 for establishing the vehicle's position, via a link 51 which enables it to receive from said means 510 a signal which represents data on the vehicle's current location.

The electronic control unit 100 is signal-connected from the map information unit 520, via a link 52 which enables it to receive from the map information unit for taking the vehicle's location into account a signal which represents map data on characteristics along the vehicle's itinerary such as traffic lanes, types of road, protected areas such as factory areas for vehicle manufacture, exit/entry roads, obstacles, speed limits and the like.

The electronic control unit 100 is signal-connected from the means 600 for activation of modes of the vehicle's functionality, via a link 60 which enables it to receive from said means 600 a signal which represents activation data. In one variant said modes are activated automatically on an uncompleted vehicle.

The electronic control unit 100 is signal-connected from the means 600 for activation of modes of the vehicle's functionality, via a link 60 which enables it to receive from said means 600 a signal which represents data for deactivation of said modes when it is established that the vehicle has been completed, which deactivation in one embodiment is permanent.

The electronic control unit 100 is arranged to process said activation data, data on whether the vehicle has been fitted with its bodywork, location data and map data in order thus to establish adjustment of the uncompleted vehicle. In one embodiment, adjustment of the vehicle and its functionalities depends on whether the vehicle has been fitted with its bodywork. In one embodiment, adjustment of the vehicle and its functionalities depends on the vehicle's location and whether it is on a public road, type of road, which country etc.

The electronic control unit 100 is arranged to process said data about which vehicle functions have been adjusted and how they have been adjusted and to send information in the form of presentation data for visual, acoustic and/or tactile warning to the driver, and/or to send information in the form of presentation data for visual and/or acoustic warning to the surroundings and/or communication data to warn the surroundings that the vehicle is uncompleted in terms of functionality.

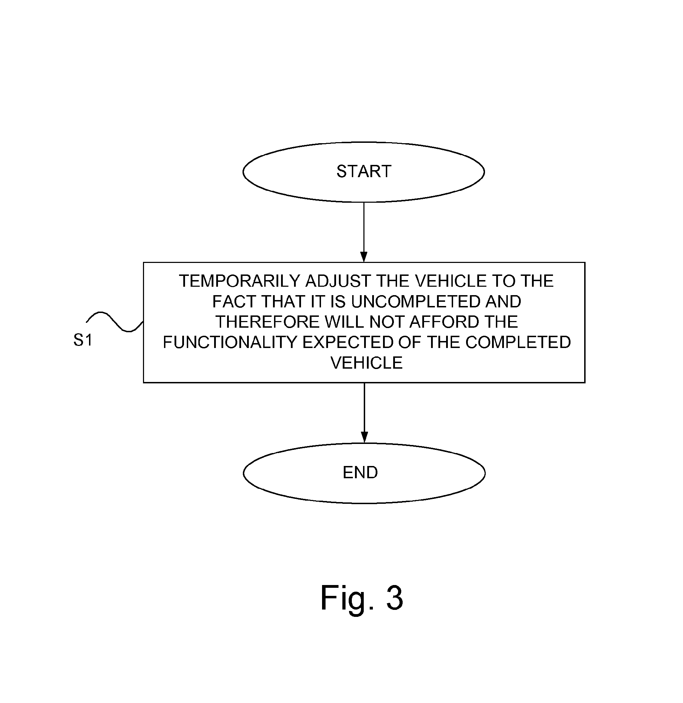

Fig. 3 is a schematic block diagram illustrating a method for safety adjustment of a motor vehicle according to an embodiment of the present invention.

In one embodiment the method for safety adjustment of a motor vehicle comprises a step S1 of temporarily adjusting the vehicle to the fact that it is uncompleted and therefore will not afford the functionality expected of the completed vehicle.

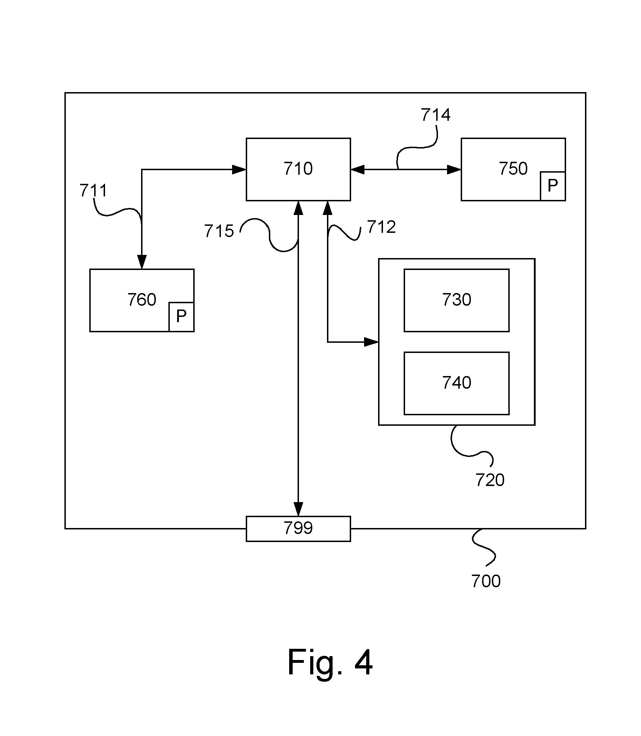

Fig. 4 is a diagram of one version of a device 700. The control unit 100 described with reference to Figure 2 may in one version comprise the device 700. The device 700 comprises a non-volatile memory 720, a data processing unit 710 and a read/write memory 750. The non-volatile memory has a first memory element 730 in which a computer programme, e.g. an operating system, is stored for controlling the function of the device 700. The device 700 further comprises a bus controller, a serial communication port, I/O means, an A/D converter, a time and date input and transfer unit, an event counter and an interruption controller (not depicted). The non-volatile memory has also a second memory element 740.

A proposed computer programme P comprises routines for safety adjustment of a motor vehicle according to the innovative method. The programme P comprises routines for temporarily adjusting the vehicle to the fact that it is uncompleted and therefore will not afford the functionality expected of the completed vehicle. The programme P may be stored in an executable form or in compressed form in a memory 760 and/or a read/write memory 750.

Where the data processing unit 710 is described as performing a certain function, it means that it conducts a certain part of the programme stored in the memory 760 or a certain part of the programme stored in the read/write memory 750.

The data processing device 710 can communicate with a data port 799 via a data bus 715. The non-volatile memory 720 is intended for communication with the data processing unit 710 via a data bus 712. The separate memory 760 is intended to communicate with the data processing unit via a data bus 711. The read/write memory 750 is adapted to communicating with the data processing unit via a data bus 714. The links associated for example with the control unit 100 may be connected to the data port.

When data are received on the data port 799, they are stored temporarily in the second memory element 740. When input data received have been temporarily stored, the data processing unit 710 is prepared to conduct code execution as described above. The signals received on the data port may be used by the device 700 for temporarily adjusting the vehicle to the fact that it is uncompleted and therefore will not afford the functionality expected of the completed vehicle.

Parts of the methods herein described may be conducted by the device 700 by means of the data processing unit 710 which runs the programme stored in the memory 760 or the read/write memory 750. When the device 700 runs the programme, methods herein described are executed.

The above description of the preferred embodiments of the present invention is provided for illustrative and descriptive purposes. It is not intended to be exhaustive, nor to restrict the invention to the variants described. Many modifications and variations will obviously suggest themselves to one skilled in the art. The embodiments have been chosen and described in order best to explain the principles of the invention and their practical applications and thereby make it possible for one skilled in the art to understand the invention for different embodiments and with the various modifications appropriate to the intended use.

## Claims

1. A method for adjustment of an uncompleted motor vehicle (1), **characterised by** the step (S1) of temporarily limiting the functionality of the vehicle when it is in motion in its uncompleted state, which limitation applies to at least one from among vehicle speed, acceleration and/or engine speed.

2. A method according to claim 1, further comprising delivering a signal to the driver that the vehicle is operating with limited functionality.

3. A method according to either of claims 1-2, further comprising delivering an external signal that the vehicle is operating with limited functionality.

4. A method according to any one of claims 1-3, in which the temporary limitation depends on the vehicle's location.

5. A system (I) adapted to adjusting an uncompleted motor vehicle (1), **characterised by** means (200, 300, 400, 500, 600) adapted to temporarily limiting the functionality of the vehicle when it is in motion in its uncompleted state, which limitation applies to at least one from among vehicle speed, acceleration and/or engine speed.

6. A system according to claim 5, further comprising means for delivering a signal to the driver that the vehicle is operating with limited functionality.

7. A system according to claim 5 or 6, further comprising means for delivering an external signal that the vehicle is operating with limited functionality.

8. A system according to any one of claims 5-7, in which the means (200, 300, 400, 500, 600) for temporarily limiting the vehicle's functionality is adapted to taking the vehicle's location into account.

9. A vehicle (1) provided with a system (I) according to any one of claims 5-8.

10. A computer programme (P) for safety adjustment of a motor vehicle, which programme (P) comprises programme code which, when run by an electronic control unit (100) or another computer (700) connected to the electronic control unit (100), enables the electronic control unit (100) to perform steps according to claims 1-4.

11. A computer programme product comprising a digital storage medium which stores the computer programme according to claim 10.
